(19)

Europäisches
Patentamt

European
Patent Office

Office européen
des brevets

(11) **EP 4 403 598 A1**

(12) **EUROPEAN PATENT APPLICATION**

(43) Date of publication:
   **24.07.2024 Bulletin 2024/30**

(21) Application number: **23152904.1**

(22) Date of filing: **23.01.2023**

(51) International Patent Classification (IPC):
   *C08J 5/18* (2006.01)   *C08L 23/04* (2006.01)
   *C08L 23/08* (2006.01)

(52) Cooperative Patent Classification (CPC):
   (C-Sets available)
   **C08L 23/0815; C08J 5/18; C08L 23/04;**
   B29C 48/022; B29C 48/10; C08J 2300/30;
   C08J 2323/04; C08L 2207/20         (Cont.)

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(71) Applicant: **Borealis AG**
   **1020 Vienna (AT)**

(72) Inventor: **BURYAK, Andrey**
   **4021 Linz (AT)**

(74) Representative: **Ter Meer Steinmeister & Partner
   Patentanwälte mbB
   Nymphenburger Straße 4
   80335 München (DE)**

(54) **POLYMER COMPOSITION COMPRISING RECYCLED LOW DENSITY POLYETHYLENE FOR PACKAGING APPLICATIONS**

(57) The present invention relates to a polymer composition comprising a recycled low density polyethylene and a linear low density polyethylene being a terpolymer of ethylene and two alpha-olefin comonomers and having a density ranging from 915 kg/m$^3$ and more to less than 928 kg/m$^3$. Furthermore, a monolayer film comprising such a polymer composition or a multilayered film structure comprising such a polymer composition, and a method for their manufacture is provided by the present invention. Additionally, the present invention is directed to the use of a linear low density polyethylene being a terpolymer of ethylene and two alpha-olefin comonomers and having a density in a specific range for the manufacture of a monolayer film comprising recycled low density polyethylene.

**EP 4 403 598 A1**

(52) Cooperative Patent Classification (CPC): (Cont.)

C-Sets
**C08L 23/04, C08L 23/0815, C08L 23/0815,**
**C08L 23/0815;**
**C08L 23/0815, C08L 23/0815, C08L 23/0815,**
**C08L 23/04**

**Description**

**Field of the Invention**

The present invention relates to a polymer composition comprising a recycled low density polyethylene and a linear low density polyethylene being a terpolymer of ethylene and two alpha-olefin comonomers and having a density ranging from 915 kg/m$^3$ and more to less than 928 kg/m$^3$. Furthermore, a monolayer film comprising such a polymer composition or a multilayered film structure comprising such a polymer composition, and a method for their manufacture is provided by the present invention. Additionally, the present invention is directed to the use of a linear low density polyethylene being a terpolymer of ethylene and two alpha-olefin comonomers and having a density in a specific range for the manufacture of a monolayer film comprising recycled low density polyethylene.

**Technical Background**

Enormous amounts of waste plastic, such as waste plastic originating from packaging applications, are generated every day. Available strategies for their disposal are still not satisfying from an environmental point of view. Therefore, the development of concepts for recycling of waste plastic is an important area of research.

The attempt of reusing plastics is, moreover, not only of increasing interest for ecological reasons. Recycling also allows to reduce production costs, which is, of course, another aspect why recycling of plastic is attractive.

In view of the above, the polymer industry puts efforts to include polymers from waste materials in the manufacture of new products so that waste plastic (e.g. post-consumer recyclate, PCR) is turned into a resource for new plastic products. Yet, this is complicated by the fact that products, such as film structures, containing post-consumer recyclates usually have poor mechanical properties - particularly a low stiffness combined with a low toughness.

A known countermeasure is the increase of the film thickness which, in turn, is not desirable for several reasons, not at least because it is not resource-friendly and, again, increases the production costs.

Film structures including waste plastic are, occasionally, known from the prior art. The international application WO 2020/207940 A1, for example, provides collation shrink films comprising a recycled low density polyethylene in the core layer. This film is used in packaging applications. However specific properties are demanded from a collation shrink film as compared to other film structures, e.g. in terms of mechanical properties.

It is therefore an object of the present invention to provide a polymer composition including recycled low density polyethylene, which is suitable for the manufacture of a film structure that fulfils the general requirements for packaging applications, in particular in terms of mechanical and optical properties.

It is a further object of the present invention to provide respective films, which contain recycled low density polyethylene but do not suffer from the drawbacks generally connected with recycled materials.

Also, it is an object of the present invention to identify a virgin polymer that is suitable for the manufacture of a monolayer film having excellent mechanical properties although comprising recycled low density polyethylene.

**Summary of the Invention**

The above identified objects are achieved by the polymer composition according to independent claim 1, the monolayer film and multilayered film structure according to claim 10 and the use of a linear low density polyethylene for the manufacture of a monolayer film comprising recycled low density polyethylene according to claim 15. Advantageous embodiments may be derived from the dependent claims.

The polymer composition according to the present invention comprises 25 to 95 wt.-% of a linear low density polyethylene and 5 to 75 wt.-% of a recycled low density polyethylene, relative to the total weight of the polymer composition, wherein the linear low density polyethylene is a terpolymer of ethylene and two alpha-olefin comonomers and has a density ranging from 915 kg/m$^3$ and more to less than 928 kg/m$^3$, as determined according to ISO 1183.

This polymer composition has extraordinary processing properties. Most notably, the polymer composition provides an excellent property profile, in particular excellent mechanical, rheological and optical properties. Due to this property profile, the polymer composition can be extruded to films according to any method known in the art. The films offer a good balance between stiffness (tensile modulus) and toughness (dart drop impact, DDI). Moreover, thanks to the favorable rheological properties, the films can be produced at a usual melt pressure and high throughput.

In an embodiment, the polymer composition comprises 35 to 85 wt.-% of the linear low density polyethylene and 15 to 65 wt.-% of the recycled low density polyethylene.

In a further embodiment, the polymer composition has an MFR$_2$ as determined according to ISO 1133 ranging from 0.05 to 5.0 g/10 min, preferably from 0.1 to 1.0 g/10 min, even more preferably from 0.2 to 0.6 g/10 min. Furthermore, the polymer composition may have a density as determined according to ISO 1183 ranging from 920 kg/m$^3$ and more to 935 kg/m$^3$ or less, preferably from 922 kg/m$^3$ and more to 930 kg/m$^3$ or less.

The polymer composition of the invention can be provided in the form of powder or pellets, preferably pellets. Pellets are obtained by conventional extrusion, granulation or grinding techniques and are an ideal form of the polymer composition of the invention because they can be added directly to a converting machinery. Pellets are distinguished from polymer powders where particle sizes are less than 1 mm. Furthermore, the use of pellets ensures that the polymer composition is capable of being converted into a film by the simple in-line addition of the pellets to the converting machinery.

Linear low density polyethylene (LLDPE)

The linear low density polyethylene (LLDPE) is preferably a multimodal LLDPE, more preferably a LLDPE which is more than bimodal, particularly a trimodal LLDPE. Further preferably, the LLDPE is a virgin polymer material.

In one embodiment, the LLDPE has an $MFR_2$ as determined according to ISO 1133 ranging from 0.01 to 0.5 g/10 min, preferably from 0.1 to 0.4 g/10 min, even more preferably from 0.15 to 0.3 g/10 min. The LLDPE may have an $MFR_5$ as determined according to ISO 1133 ranging from 0.5 to 5.0 g/10 min, preferably from 0.5 to 3.0 g/10 min, more preferably from 0.6 to 2.0 g/10 min, even more preferably 0.7 to 1.5 g/10 min. Also, the LLDPE may have an $MFR_{21}$ as determined according to ISO 1133 in a range of from 5 to 40 g/10 min, more preferably of from 10 to 30 g/10 min and even more preferably of from 15 to 28 g/10 min.

The density of the LLDPE preferably ranges from 918 to 925 $kg/m^3$.

$MFR_2$, $MFR_5$, $MFR_{21}$ and the density range, as indicated above, relate to the LLDPE after extrusion into pellets.

The two alpha-olefin comonomers may be selected from the group of alpha-olefins having from 3 to 10 carbon atoms, in particular 1-butene and 1-hexene. Hence, it is the most preferred when the terpolymer of ethylene and two alpha-olefin comonomers is a terpolymer of ethylene/1-butene/1-hexene.

The LLDPE may comprise 5 to 25 wt.-%, relative to the total weight of the LLDPE, of a first ethylene copolymer fraction (A1) made of a copolymer of ethylene and at least a first alpha-olefin comonomer, preferably with a density ranging from 920 to 960 $kg/m^3$, as determined according to ISO 1183; 15 to 35 wt.-%, relative to the total weight of the LLDPE, of a second ethylene copolymer fraction (A2) made of a copolymer of ethylene and at least the first alpha-olefin comonomer, preferably with a density ranging from 920 to 960 $kg/m^3$, as determined according to ISO 1183; and 40 to 80 wt.-%, relative to the total weight of the LLDPE, of a third ethylene copolymer fraction (B) made of a polymer of ethylene and at least the first and a second alpha-olefin comonomer, wherein the third ethylene copolymer fraction (B) preferably has a higher weight-average molecular weight (Mw) than the first ethylene copolymer fraction (A1) and the second ethylene copolymer fraction (A2).

The content of the second alpha-olefin comonomer in the third ethylene copolymer fraction (B) is preferably in a range of from 15 to 85 % based on the total comonomer content on a mol basis in the third ethylene copolymer fraction (B), as determined according to quantitative $^{13}$C-NMR spectroscopy analysis.

The LLDPE preferably has a total comonomer content ranging from 1.5 to 5.0 mol-%, as determined by quantitative $^{13}$C-NMR spectroscopy analysis, as detailed in the example section below. More preferably, the LLDPE has an overall comonomer content in a range of from 2.5 to 3.9 mol-%.

According to a particularly preferred embodiment, the LLDPE comprises the first alpha-olefin comonomer, more preferably 1-butene in an amount of from 0.5 to 4.5 mol-% as determined according to quantitative $^{13}$C-NMR spectroscopy analysis and/or the second alpha-olefin comonomer, more preferably 1-hexene, in an amount of from 0.5 to 4.5 mol-% as determined according to quantitative $^{13}$C-NMR spectroscopy analysis.

Furthermore, the LLDPE may have a number average molecular weight (Mn) in a range of from 8,000 to 14,000 g/mol, preferably of from 9,000 to 12,000 g/mol; and/or a weight average molecular weight (Mw) in a range of from 150,000 to 200,000 g/mol, preferably of from 160,000 to less than 190,000 g/mol; and/or a z-average molecular weight (Mz) in a range of from 750,000 to 1,000,000 g/mol, preferably of from 800,000 to 920,000 g/mol; wherein the molecular weight averages Mw, Mn and Mz are determined by Gel Permeation Chromatography (e.g. as described in the example section below).

The ratio Mw/Mn of the LLDPE preferably ranges from 10 to 25. The ratio Mz/Mw of the LLDPE preferably ranges from 4 to 10. More preferably, the LLDPE has a ratio Mw/Mn in a range of from 10 to 20 and/or a ratio Mz/Mw in a range of from 4 to 8.

LLDPE - First ethylene copolymer fraction (A1)

The first ethylene copolymer fraction (A1) may be a copolymer of ethylene and at least a first alpha-olefin comonomer. Preferably, it forms from 5 to 25 wt.-%, more preferably from 10 to 20 wt.-%, of the LLDPE. The first alpha-olefin comonomer may preferably be selected from alpha-olefin comonomers having from 3 to 10 carbon atoms. More preferably, the first alpha-olefin comonomer is selected from 1-butene, 1-hexene and 1-octene; even more preferably, the first alpha-olefin comonomer is 1-butene. According to a particularly preferred embodiment of the invention, the first ethylene copolymer fraction (A1) is a copolymer of ethylene and 1-butene.

The first ethylene copolymer fraction (A1) preferably has an $MFR_2$, as determined according to ISO 1133, in a range of from 50 to 600 g/10 min, preferably of from 100 to 500 g/10min.

The first ethylene copolymer fraction (A1) has a density, as determined according to ISO 1183, ranging from 920 to 960 kg/m$^3$, and more preferably from 940 to 955 kg/m$^3$.

LLDPE - Second ethylene copolymer fraction (A2)

The second ethylene copolymer fraction (A2) may be a copolymer of ethylene and at least the first alpha-olefin comonomer. Preferably, it forms from 15 to 35 wt.-%, more preferably from 20 to 30 wt.-%, of the LLDPE. The first alpha-olefin comonomer may be the same as in the first ethylene copolymer fraction (A1) and may preferably be selected from alpha-olefin comonomers having from 3 to 10 carbon atoms. More preferably, the first alpha-olefin comonomer is selected from 1-butene, 1-hexene and 1-octene; even more preferably, the first alpha-olefin comonomer is 1-butene. According to a particularly preferred embodiment of the invention, the second ethylene copolymer fraction (A2) is a copolymer of ethylene and 1-butene.

The second ethylene copolymer fraction (A2) preferably has an $MFR_2$, as determined according to ISO 1133, in a range of from 50 to 600 g/10min, preferably of from 100 to 500 g/10min.

The second ethylene copolymer fraction (A2) has a density, as determined according to ISO 1183, ranging from 920 to 960 kg/m$^3$, and more preferably from 945 to 955 kg/m$^3$.

The first ethylene copolymer fraction (A1) and the second ethylene copolymer fraction (A2) and, optionally, a further polymer fraction from an optional prepolymerisation step, are comprised in a first ethylene polymer mixture (hereinafter PEM1).

The overall comonomer content of said first ethylene polymer mixture (PEM1) preferably is in a range of from 0.5 to 3.0 mol-%.

LLDPE - Third ethylene copolymer fraction (B)

The third ethylene copolymer fraction (B) may be a terpolymer of ethylene and the first and a second alpha-olefin comonomer. Preferably, the third ethylene copolymer fraction (B) forms from 40 to 80 wt.-%, more preferably from 50 to 70 wt.-%, of the LLDPE. The first alpha-olefin comonomer may be the same as in the first ethylene copolymer fraction (A1) and the second ethylene copolymer fraction (A2) above. The second alpha-olefin comonomer, on the other hand, is preferably selected from alpha-olefin comonomers having from 3 to 10 carbon atoms. More preferably, the second alpha-olefin comonomer is selected from 1-butene, 1-hexene and 1-octene. More preferably, the third ethylene copolymer fraction (B) comprises 1-butene as the first alpha-olefin comonomer and/or 1-hexene as the second alpha-olefin comonomer. Even more preferably, the third ethylene copolymer fraction (B) is a terpolymer of ethylene, 1-butene and 1-hexene. In this embodiment, the LLDPE may comprise an amount of 1-butene from 0.5 to 4.0 mol-%, more preferably from 0.5 to 3.0 mol-%, even more preferably from 0.5 to 2.0 mol-%, as determined according to quantitative $^{13}$C NMR spectroscopy analysis and/or an amount of 1-hexene from 0.5 to 4.0 mol-%, as determined according to quantitative $^{13}$C NMR spectroscopy analysis.

A total comonomer content in said third ethylene copolymer fraction (B), as determined according to quantitative $^{13}$C-NMR spectroscopy analysis, is preferably between 1 and 10 mol-%, more preferably between 2 and 8 mol-%, even more preferably between 3 and 7 mol-%.

The second alpha-olefin comonomer is preferably comprised in the third ethylene copolymer fraction (B) in an amount of from 15 to 85%, preferably from 20 to 83%, even more preferably from 25 to 80% based on the total comonomer content on mol basis in the third ethylene copolymer fraction (B), as determined according to quantitative $^{13}$C-NMR spectroscopy analysis.

According to a particularly preferred embodiment, said third ethylene copolymer fraction (B) is a terpolymer of ethylene, 1-butene and 1-hexene, wherein 1-hexene is comprised in an amount of from 25 to 80% based on a total comonomer content on mol basis in the third ethylene copolymer fraction (B), as determined according to quantitative $^{13}$C-NMR spectroscopy analysis, and wherein the total comonomer content in the third ethylene copolymer fraction (B), as determined according to quantitative $^{13}$C-NMR spectroscopy analysis, is between 3 and 7 mol-%.

The third ethylene copolymer fraction (B) preferably has a higher weight-average molecular weight (Mw) than the first ethylene copolymer fraction (A1) and the second ethylene copolymer fraction (A2).

The first ethylene polymer mixture (PEM1) and the third ethylene copolymer fraction (B) are preferably comprised in a second ethylene polymer mixture (PEM2). Preferably, the first ethylene polymer mixture (PEM1) and the third ethylene copolymer fraction (B) constitute and/or make up a second ethylene polymer mixture (PEM2). The LLDPE may comprise or consist of the second ethylene polymer mixture (PEM2).

The second ethylene polymer mixture (PEM2) preferably has an $MFR_2$, as determined according to ISO 1133,

in a range of from 0.01 to 0.5 g/10 min, more preferably of from 0.1 to 0.4 g/10 min and even more preferably of from 0.15 to 0.30 g/10 min.

The second ethylene polymer mixture (PEM2) preferably has an $MFR_5$, as determined according to ISO 1133, in a range of from 0.1 to 2.0 g/10 min, more preferably of from 0.5 to 1.5 g/10 min and even more preferably of from 0.7 to 1.2 g/10 min.

The second ethylene polymer mixture (PEM2) preferably has an $MFR_{21}$ as determined according to ISO 1133 in a range of from 5 to 40 g/10min, more preferably of from 10 to 30 g/10min and even more preferably of from 15 to 27 g/10min.

The second ethylene polymer mixture (PEM2) preferably has a density, as determined according to ISO 1183, of from 900 to 940 kg/m$^3$, more preferably of from 910 to 930 kg/m$^3$ and even more preferably of from 915 to 925 g/10min.

LLDPE - Polymerisation process

The present process for producing a LLDPE as described herein above comprises the following steps (a)-(d):

(a) polymerising, in a first polymerisation step, ethylene and at least a first alpha-olefin comonomer to produce a first ethylene copolymer fraction (A1),

(b) polymerising, in a second polymerisation step, ethylene and at least the first alpha-olefin comonomer in the presence of said first ethylene copolymer fraction (A1) to produce a first ethylene polymer mixture (PEM1) comprising said first ethylene copolymer fraction (A1) and a second ethylene copolymer fraction (A2),

(c) polymerising, in a third polymerisation step ethylene, the first and a second alpha-olefin comonomer in the presence of said first ethylene polymer mixture (PEM1), to produce a second ethylene polymer mixture (PEM2) comprising the first ethylene polymer mixture (PEM1) and a third ethylene copolymer fraction (B), and

(d) extruding said second ethylene polymer mixture (PEM2) to obtain the LLDPE.

Preferably, steps (a), (b) and (c) of the process are carried out in the presence of a Ziegler-Natta polymerisation catalyst.

The first and the second alpha-olefin comonomer used in steps (a), (b) and (c) may be selected independently from alpha-olefins having from 3 to 10 carbon atoms and their mixtures. Especially suitable alpha-olefins are those having from 4 to 8 carbon atoms, including their mixtures. In particular 1-butene, 1-hexene and 1-octene and their mixtures are the preferred alpha-olefins. The first alpha-olefin comonomer used in steps (a), (b) and (c) is preferably the same, while the second alpha-olefin comonomer is preferably different from the first alpha-olefin comonomer. The polymerisation steps may be connected in any order, *i.e.* the first polymerisation step may precede the second polymerisation step, or the second polymerisation step may precede the first polymerisation step or, alternatively, polymerisation steps may be connected in parallel. However, it is preferred to operate the polymerisation steps in cascaded mode.

LLDPE - Catalyst

As already pointed out above, polymerisation steps (a), (b) and (c) of the process for producing the LLDPE described herein, are preferably carried out in the presence of a Ziegler-Natta polymerisation catalyst.

Ziegler-Natta catalysts are useful as they can produce polymers within a wide range of molecular weight and other desired properties with a high productivity. Ziegler-Natta catalysts used in the present invention are preferably supported on an external support.

Suitable Ziegler-Natta catalysts preferably contain a magnesium compound, an aluminum compound and a titanium compound supported on a particulate support.

The particulate support typically used in Ziegler-Natta catalysts comprises an inorganic oxide support, such as silica, alumina, titania, silica-alumina and silica-titania or a $MgCl_2$ based support. The catalyst used in the present invention is supported on an inorganic oxide support. Most preferably the Ziegler-Natta catalyst used in the present invention is supported on silica.

The average particle size of the silica support can be typically from 10 to 100 $\mu$m. However, it has turned out that special advantages can be obtained if the support has an average particle size from 15 to 30 $\mu$m, preferably from 18 to 25 $\mu$m. Alternatively, the support may have an average particle size of from 30 to 80 $\mu$m, preferably from 30 to 50 $\mu$m. Examples of suitable support materials are, for instance, ES747JR produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminum compound is chlorine containing aluminum alkyl. Especially preferred compounds are aluminum alkyl dichlorides, aluminum dialkyl chlorides and aluminum alkyl sesquichlorides.

The transition metal is preferably titanium. The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

The Ziegler-Natta catalyst is used together with an activator, which is also called as cocatalyst. Suitable activators are metal alkyl compounds, typically Group 13 metal alkyl compounds, and especially aluminum alkyl compounds. They include trialkylaluminum compounds, such as trimethylaluminum, triethylaluminum, tri-isobutyl aluminum, trihexyl-aluminum and tri-n-octylaluminum. Aluminum alkyl compounds may also include alkyl aluminum halides, such as ethylaluminum dichloride, diethylaluminum chloride, ethylaluminum sesquichloride, dimethylaluminum chloride and the like and alkylaluminum oxy-compounds, such as methylaluminumoxane, hexaisobutylaluminumoxane and tetraisobutylaluminumoxane and also other aluminum alkyl compounds, such as isoprenylaluminum. Especially preferred cocatalysts are trialkylaluminums, of which triethylaluminum, trimethylaluminum and tri-isobutylaluminum are particularly preferred.

The amount in which the activator is used depends on the specific catalyst and activator. Typically triethylaluminum is used in such amount that the molar ratio of aluminum to the transition metal, like Al/Ti, is for example from 1 to 1000, preferably from 3 to 100 and in particular from about 5 to about 30 mol/mol.

LLDPE - Prepolymerisation

In addition to the actual polymerisation steps (a), (b) and (c), *i.e.* in addition to the at least three polymerisation steps, the process may comprise a prepolymerisation step preceding the actual polymerisation steps. The purpose of the prepolymerisation is to polymerise a small amount of polymer onto the catalyst at a low temperature and/or a low monomer concentration. By prepolymerisation it is possible to improve the performance of the catalyst. The prepolymerisation step is conducted in slurry.

Thus, the prepolymerisation step may be conducted in a loop reactor. The prepolymerisation is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerisation step is typically from 0 to 90 °C, preferably from 20 to 80 °C and more preferably from 55 to 75 °C. The pressure is not critical and is typically from 1 to 150 bar, preferably from 40 to 80 bar.

The amount of monomer is typically such that from about 0.1 to 1000 grams of monomer per one gram of solid catalyst component is polymerised in the prepolymerisation step. As the person skilled in the art knows, the catalyst particles recovered from a continuous prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additive may be used to prevent the particles from adhering to each other or to the walls of the reactor, as disclosed in WO-A-96/19503 and WO-A-96/32420.

If a prepolymerisation step is used, it is preferred that the prepolymer is ethylene copolymer. Any prepolymer component is regarded as part of the first ethylene copolymer fraction (A1). When determining the split, MFR, density etc. of the first polymer therefore the prepolymer is regarded as a part of the first ethylene copolymer fraction (A1).

The catalyst components are preferably all (separately or together) introduced to the prepolymerisation step when a prepolymerisation step is present. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce cocatalyst into the prepolymerisation stage that a sufficient polymerisation reaction is obtained therein.

Typically, the amounts of hydrogen and comonomer are adjusted so that the presence of the prepolymer has no effect on the properties of the final polymer composition. Especially, it is preferred that melt flow rate of the prepolymer is greater than the melt flow rate of the final polymer but smaller than the melt flow rate of the polymer produced in the first polymerisation stage, i.e. the first ethylene copolymer fraction (A1). It is further preferred that the density of the prepolymer is greater than the density of the final polymer. Suitably the density is approximately the same as or greater than the density of the polymer produced in the first polymerisation stage, i.e. the first ethylene copolymer fraction (A1). Further, typically the amount of the prepolymer is not more than about 5% by weight of the LLDPE, it is more preferred when it is not more than 2% by weight of the LLDPE.

LLDPE - Polymerisation Step (a)

Step (a) of the process comprises polymerising, in a first polymerisation reactor, ethylene and a first alpha-olefin comonomer to produce a first ethylene copolymer fraction (A1).

In step (a), first ethylene copolymer fraction (A1) is produced. The first ethylene copolymer fraction (A1) has a density as determined according to ISO 1183 ranging from 920 to 960 kg/m$^3$ and, preferably, a melt flow rate MFR$_2$ as determined according to ISO 1133 of from 50 to 600 g/10 min.

The catalyst may be transferred into the first polymerisation step by any means known in the art. It is thus possible to suspend the catalyst in a diluent and maintain it as homogeneous slurry. It is especially preferred to use oil having a viscosity from 20 to 1500 mPa s as diluent, as disclosed in WO-A-2006/063771. It is also possible to mix the catalyst with a viscous mixture of grease and oil and feed the resultant paste into the first polymerisation step. Further still, it is possible to let the catalyst settle and introduce portions of thus obtained catalyst mud into the first polymerisation step in a manner disclosed, for instance, in EP-A-428054. The first polymerisation step may also be preceded by a prepolymerisation step as described hereinabove, in which case the mixture withdrawn from the prepolymerisation step is directed into the first polymerisation step (a).

Into the first polymerisation step ethylene (a), a first alpha-olefin, optionally an inert diluent, and optionally hydrogen are introduced. Hydrogen and the first alpha-olefin are introduced in such amounts that the melt flow rate MFR$_2$ and the density of the first ethylene copolymer fraction (A1) are within the desired ranges.

Preferably, the first alpha-olefin is as defined above having from 3 to 10 carbon atoms. In particular, 1-butene, 1-hexene and 1-octene are the preferred alpha-olefins. It is particularly preferred that the first alpha-olefin comonomer is 1-butene.

The polymerisation of the first polymerisation step (a) may be conducted in slurry. Then the polymer particles formed in the polymerisation, together with the catalyst fragmented and dispersed within the particles, are suspended in the fluid hydrocarbon. The slurry is agitated to enable the transfer of reactants from the fluid into the particles.

The polymerisation usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 1 to about 50 % by mole, preferably from about 1.5 to about 20 % by mole and in particular from about 2 to about 15 % by mole. The benefit of having a high ethylene concentration is that the productivity of the catalyst is increased but the drawback is that more ethylene then needs to be recycled than if the concentration was lower.

The slurry polymerisation may be conducted in any known reactor used for slurry polymerisation. Such reactors include a continuous stirred tank reactor and a loop reactor. It is especially preferred to conduct the polymerisation of step (a) in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

If the first ethylene copolymer fraction (A1) is produced in conditions where the ratio of the first alpha-olefin to ethylene is not more than about 400 mol/kmol, such as not more than 300 mol/kmol, then it is usually advantageous to conduct the slurry polymerisation above the critical temperature and pressure of the fluid mixture. Such operation is described in US-A-5391654.

When the first polymerisation step (a) is conducted as slurry polymerisation, it is conducted at a temperature within the range of from 50 to 115 °C, preferably from 70 to 110 °C and in particular from 80 to 105 °C. The pressure in the first polymerisation step (a) is then from 1 to 300 bar, preferably from 40 to 100 bar, more preferably from 50 to 80 bar.

The amount of hydrogen is adjusted based on the desired melt flow rate of the first ethylene copolymer fraction (A1) and it depends on the specific catalyst used. For many generally used Ziegler-Natta catalysts the molar ratio of hydrogen to ethylene is from 10 to 2000 mol/kmol, preferably from 100 to 1000 mol/kmol, more preferably from 150 to 800 mol/kmol, in particular from 200 to 500 mol/kmol.

The amount of the first alpha-olefin is adjusted based on the desired density of the first ethylene copolymer fraction (A1) and it, too, depends on the specific catalyst used. For many generally used Ziegler-Natta catalysts the molar ratio of the first alpha-olefin to ethylene is from 100 to 1000 mol/kmol, preferably from 150 to 600 mol/kmol, more preferably from 150 to 500 mol/kmol.

The polymerisation of step (a) may also be conducted in gas phase. A preferable embodiment of gas phase polymerisation reactor is a fluidised bed reactor. There the polymer particles formed in the polymerisation are suspended in upwards moving gas. The gas is introduced into the bottom part of the reactor. The upwards moving gas passes the fluidized bed wherein a part of the gas reacts in the presence of the catalyst and the unreacted gas is withdrawn from the top of the reactor. The gas is then compressed and cooled to remove the heat of polymerisation. To increase the cooling capacity it is sometimes desired to cool the recycle gas to a temperature where a part of the gas condenses. After cooling the recycle gas is reintroduced into the bottom of the reactor. Fluidised bed polymerisation reactors are disclosed, among others, in US-A-4994534, US-A-4588790, EP-A-699213, EP-A-628343, FI-A-921632, FI-A-935856, US-A-4877587, FI-A-933073 and EP-A-75049.

According to the preferred embodiment of present invention, the polymerisation of the first polymerisation step (a) is conducted in slurry.

Further, suitably the polymerisation is conducted at a temperature exceeding the critical temperature of the fluid mixture and pressure exceeding the critical pressure of the fluid mixture.

Preferably, at least a first alpha-olefin comonomer is present in the first polymerisation step (a), where the polymer produced in the first step is the first ethylene copolymer fraction (A1). The polymerisation is preferably conducted as a slurry polymerisation in liquid diluent at a temperature of from 50 °C to 115 °C, such as from 70 to 115 °C and a pressure of from 1 bar to 300 bar, such as from 40 to 100 bar, like from 50 to 80 bar. The molar ratio of the first alpha-olefin to ethylene is then from 100 to 1000 mol/kmol, preferably from 150 to 600 mol/kmol, more preferably from 150 to 500 mol/kmol and most preferably from 180 to 400 mol/kmol. Then the molar ratio of hydrogen to ethylene is suitably from 10 to 2000 mol/kmol, preferably from 100 to 1000 mol/kmol, and more preferably from 150 to 800 mol/kmol, in particular from 200 to 500 mol/kmol. The $MFR_2$ of the first ethylene copolymer fraction (A1) produced in the first polymerisation step (a), as determined according to ISO 1133, is preferably within the range 50 to 600 g/10 min.

The polymerisation rate in the first polymerisation step (a) is suitably controlled to achieve the desired amount of the first ethylene copolymer fraction (A1) in the LLDPE. The polymerisation rate is suitably controlled by adjusting the ethylene concentration in the first polymerisation step (a).

When the first polymerisation step is conducted as slurry polymerisation in the loop reactor the mole fraction of ethylene in the reaction mixture is suitably from 2 to 10 % by mole and preferably from 3 to 8 % by mole.

LLDPE - Polymerisation Step (b)

The second ethylene copolymer fraction (A2) may be produced in a second polymerisation step (b) in the presence of the first ethylene copolymer fraction (A1).

The polymerisation may be conducted in slurry, gas phase or solution. In the second polymerisation step (b) the second copolymer of ethylene (A2) is produced in the presence of the first copolymer of ethylene (A1). Hence, the polymer produced as a result of the second polymerisation step (b) is a mixture of the first (A1) and the second ethylene copolymer fraction (A2), i.e. the first ethylene polymer mixture (PEM1).

The density, as determined according to ISO 1183, of the second ethylene copolymer fraction (A2) preferably ranges from 920 to 960 kg/m$^3$ and/or a melt flow rate $MFR_2$ of the second ethylene copolymer fraction (A2), as determined according to ISO 1133, preferably ranges of from 50 to 600 g/10 min.

The first ethylene copolymer fraction (A1) is transferred from the first polymerisation step (a) to the second polymerisation step (b) by using any method known to the person skilled in the art. If the first polymerisation step (a) is conducted as slurry polymerisation in a loop reactor, it is advantageous to transfer the slurry from the first polymerisation step (a) to the second polymerisation step (b) by means of the pressure difference between the first polymerisation step (a) and the second polymerisation step (b).

Into the second polymerisation step (b), ethylene, the first alpha-olefin comonomer, optionally an inert diluent, and optionally hydrogen may be introduced. Hydrogen and the alpha-olefin may be introduced in such amounts that the density and, preferably, the melt flow rate $MFR_2$ of the second ethylene copolymer fraction (A2) are within the desired ranges.

The first alpha-olefin comonomer used in the second polymerisation step (b) for producing the second ethylene copolymer fraction (A2) may be the same as the first alpha-olefin comonomer used in the first polymerisation step (a) for producing the first ethylene copolymer fraction (A1). This means that the first alpha-olefin preferably has from 3 to 10 carbon atoms. In particular, 1-butene, 1-hexene and 1-octene are the preferred as the first alpha-olefin. It is particularly preferred that the first alpha-olefin comonomer is 1-butene.

The polymerisation of the second polymerisation step (b) may be conducted in slurry in the same way as it was discussed above for the first polymerisation step (a).

The polymerisation of the second polymerisation step (b) may also be conducted in gas phase in the same way as was discussed above for the first polymerisation step (a). Preferably the second polymerisation step (b) is conducted in slurry phase as described above.

When the second polymerisation step (b) is conducted as slurry polymerisation, as in the first polymerisation step (a), it is conducted at a temperature within the range of from 50 to 115 °C, preferably from 70 to 110 °C and in particular from 80 to 105 °C. The pressure in the first polymerisation step (a) is then from 1 to 300 bar, preferably from 40 to 100 bar, more preferably from 50 to 80 bar.

The molar ratio of hydrogen to ethylene is suitably from 10 to 2000 mol/kmol, preferably from 100 to 1000 mol/kmol, more preferably from 150 to 800 mol/kmol, in particular from 200 to 500 mol/kmol, in the second polymerisation step (b).

Further, the polymerisation is suitably conducted at a temperature exceeding the critical temperature of the fluid mixture and pressure exceeding the critical pressure of the fluid mixture.

The density of the second ethylene copolymer fraction (A2) is controlled by the molar ratio of the first alpha-olefin to ethylene in the second polymerisation step (b). The molar ratio of the first alpha-olefin to ethylene is then from 50 to 1000 mol/kmol, preferably from 200 to 900 mol/kmol, and most preferably from 400 to 800 mol/kmol in the second polymerisation step (b).

The polymerisation rate in the second polymerisation step (b) is suitably controlled to achieve the desired amount of the second ethylene copolymer fraction (A2) in the LLDPE.

The polymerisation rate is suitably controlled by adjusting the ethylene concentration in the second polymerisation step (b). When the second polymerisation step is conducted as slurry polymerisation in the loop reactor, the mole fraction of ethylene in the reaction mixture is suitably from 1 to 10 % by mole and preferably from 2 to 6 % by mole.

As indicated above the melt flow rate $MFR_2$ of the second ethylene copolymer fraction (A2), as determined according to ISO 1133, is preferably in the range of from 50 to 600 g/10 min, more preferably in the range of from 100 to 500 g/10 min.

LLDPE - Polymerisation Step (c)

The third ethylene copolymer fraction (B) may be produced in a third polymerisation step (c) in the presence of the first ethylene polymer mixture (PEM1). The polymer obtained as a result of the third polymerisation step is, thus, the second ethylene polymer mixture (PEM2).

Ethylene, the first alpha-olefin comonomer, a second alpha-olefin comonomer, hydrogen and optionally an inert diluent may be introduced into the third polymerisation step (c), along with the first ethylene polymer mixture (PEM1).

The polymerisation in the third polymerisation step (c) is preferably conducted at a temperature within the range of from 50 to 100 °C, preferably from 60 to 100 °C and in particular from 70 to 95 °C. The pressure in the third polymerisation step (c) is for example from 1 to 300 bar, preferably from 5 to 100 bar.

The polymerisation in the third polymerisation step (c) may be conducted in slurry. The polymerisation may then be conducted along the lines as was discussed above for the first and second polymerisation steps.

The amount of hydrogen in the third polymerisation step (c) is adjusted for achieving the desired melt flow rate of the third ethylene copolymer fraction (B). The molar ratio of hydrogen to ethylene depends on the specific catalyst used. For many generally used Ziegler-Natta catalysts the molar ratio of hydrogen to ethylene is for example from 0 to 50 mol/kmol, preferably from 3 to 35 mol/kmol.

Furthermore, the amount of alpha-olefin comonomers preferably having from 3 to 10 carbon atoms is adjusted to reach the targeted density. The ratio of the alpha-olefin (sum of alpha-olefins) to ethylene depends on the type of the catalyst and the type of the alpha-olefin(s). The ratio is typically for example from 100 to 1000 mol/kmol, preferably from 150 to 800 mol/kmol. Since more than one alpha-olefin is used, the ratio of the alpha-olefin to ethylene is the ratio of the sum of all the alpha-olefins to ethylene.

The alpha-olefin comonomers are preferably selected from alpha-olefins having from 3 to 10 carbon atoms or mixtures thereof. In particular 1-butene, 1-hexene and 1-octene and their mixtures are the preferred alpha-olefins, especially preferred are 1-butene and 1-hexene.

The content of the second alpha-olefin comonomer in the third ethylene copolymer fraction (B) is in a range of from 15 to 85 % based on the total comonomer content on mol basis in the third ethylene copolymer fraction (B).

As previously noted, it is preferred that the third ethylene copolymer fraction (B) comprises at least two, ideally only two, comonomers. It is particularly preferred that these are 1-butene and 1-hexene. That is to say, it is even more particularly preferred that the first alpha-olefin comonomer is 1-butene and the second alpha-olefin comonomer is 1-hexene, *i.e.* the third ethylene copolymer fraction (B) is a terpolymer, in particular a terpolymer of ethylene/1-butene/1-hexene.

The polymerisation in the third polymerisation step (c) may be, and preferably is, conducted in gas phase. In gas phase polymerisation using a Ziegler-Natta catalyst hydrogen is typically added in such amount that the ratio of hydrogen to ethylene is for example from 3 to 100 mol/kmol, preferably from 4 to 50 mol/kmol for obtaining the desired melt index of the third ethylene copolymer fraction (B). The amount of alpha-olefins having from 3 to 10 carbon atoms is adjusted to reach the targeted density of the third ethylene copolymer fraction (B). The ratio of the alpha-olefin to ethylene is typically from 100 to 1000 mol/kmol, preferably from 150 to 800 mol/kmol, more preferably from 200 to 500 mol/kmol. Since more than one alpha-olefin is used the ratio of the alpha-olefin to ethylene is the ratio of the sum of all the alpha-olefins to ethylene.

The gas phase reactor preferably is a vertical fluidised bed reactor. There the polymer particles formed in the polymerisation are suspended in upwards moving gas. The gas is introduced into the bottom part of the reactor. The upwards moving gas passes the fluidised bed wherein a part of the gas reacts in the presence of the catalyst and the unreacted gas is withdrawn from the top of the reactor. The gas is then compressed and cooled to remove the heat of polymerisation. To increase the cooling capacity it is sometimes desired to cool the recycle gas to a temperature where a part of the gas condenses. After cooling, the recycle gas is reintroduced into the bottom of the reactor. Fluidised bed polymerisation reactors are disclosed, among others, in US-A-4994534, US-A-4588790, EP-A-699213, EP-A-628343, FI-A-921632, FI-A-935856, US-A-4877587, FI-A-933073 and EP-A-75049.

When the first (a) or the second (b) polymerisation step is conducted in slurry and the third polymerisation step (c) is conducted in gas phase, the polymer is suitably transferred from the first (a) or the second (b) polymerisation step into the third polymerisation step (c) as described in EP-A-1415999. The procedure described in paragraphs [0037] to [0048] of EP-A-1415999 provides an economical and effective method for product transfer.

The conditions in the third polymerisation step (c) are adjusted so that the third ethylene copolymer fraction (B) has $MFR_2$, $MFR_5$, $MFR_{21}$ and density in the desired ranges as set out above.

The polymerisation rate in the third polymerisation step (c) is suitably controlled to achieve the desired amount of the third ethylene copolymer fraction (B) in the second ethylene polymer mixture (PEM2) and the LLDPE, respectively. Preferably the final LLDPE contains from 40 to 80 wt.-%, more preferably 50 to 70 wt.-% of the third ethylene copolymer fraction (B). The polymerisation rate is suitably controlled by adjusting the ethylene concentration in the third polymerisation step (c). When the third polymerisation step (c) is conducted in gas phase the mole fraction of ethylene in the reactor gas is suitably from 3 to 50 % by mole and preferably from 5 to 25 % by mole.

In addition to ethylene, comonomer and hydrogen the gas also comprises an inert gas. The inert gas can be any gas which is inert in the reaction conditions, such as a saturated hydrocarbon having from 1 to 5 carbon atoms, nitrogen or a mixture of the above-mentioned compounds. Suitable hydrocarbons having from 1 to 5 carbon atoms are methane, ethane, propane, n-butane, isobutane, n-pentane, isopentane and mixtures thereof.

LLDPE - Post Reactor Treatment

When the second ethylene polymer mixture (PEM2) has been removed from the polymerisation reactor it may be subjected to process steps for removing residual hydrocarbons from the polymer. Such processes are well known in the art and can include pressure reduction steps, purging steps, stripping steps, extraction steps and the like. Also combinations of different steps are possible.

According to one preferred process, at least a part of the hydrocarbons is removed from the polymer powder by reducing the pressure. The powder is then contacted with steam at a temperature of from 90 to 110 °C for a period of from 10 minutes to 3 hours. Thereafter the powder is purged with inert gas, such as nitrogen, over a period of from 1 to 60 minutes at a temperature of from 20 to 80 °C.

According to another preferred process, the polymer powder is subjected to a pressure reduction as described above. Thereafter it is purged with an inert gas, such as nitrogen, over a period of from 20 minutes to 5 hours at a temperature of from 50 to 90 °C. The inert gas may contain from 0.0001 to 5 %, preferably from 0.001 to 1 %, by weight of components for deactivating the catalyst contained in the polymer, such as steam.

The purging steps are preferably conducted continuously in a settled moving bed. The polymer moves downwards as a plug flow and the purge gas, which is introduced to the bottom of the bed, flows upwards.

Suitable processes for removing hydrocarbons from polymer are disclosed in WO-A-02/088194, EP-A-683176, EP-A-372239, EP-A-47077 and GB-A-1272778.

After removal of residual hydrocarbons, the polymer is preferably mixed with additives as it is well known in the art to form a polymer composition. Such additives include anti-block agents, slip agents, process stabilizers, antioxidants, anti-acids, UV protecting agents, nucleating agents and antistatic agents and combinations or blends thereof.

The polymer particles are mixed with additives and extruded to pellets as it is known in the art. Preferably a counter-rotating twin screw extruder is used for the extrusion step. Such extruders are manufactured, for instance, by Kobe and Japan Steel Works. A suitable example of such extruders is disclosed in EP-A-1600276. Typically the specific energy input (SEI) is during the extrusion within the range of from 100 to 230 kWh/ton. The melt temperature is typically from 220 to 290 °C.

Recycled low density polyethylene

The polymer composition according to the present invention further comprises 5 to 75 wt.-% of a recycled low density polyethylene (recycled LDPE), relative to the total weight of the polymer composition.

Generally, LDPEs are well known in the art and are usually produced in high pressure processes in a tubular reactor or an autoclave.

In the context of the present invention, the term "recycled low density polyethylene" refers to a recycled polymer material that preferably comprises at least 75 wt.-%, more preferably at least 80 wt.-%, even more preferably at least 90 wt.-% and most preferably at least 95 wt.-% of LDPE which has been recycled, relative to the total weight of the recycled low density polyethylene. Accordingly, the "recycled low density polyethylene" may only comprise up to 25 wt.-%, preferably up to 20 wt.-%, more preferably up to 10 wt.-% and most preferably up to 5 wt.-% of other (preferably recycled) polymer components such as for example LLDPE, MDPE and HDPE, relative to the total weight of the recycled low density polyethylene.

Recycled polymer material is a polymer material that is recovered from waste plastic material derived from post-consumer and/or industrial waste. Post-consumer waste (PCR) refers to objects having completed at least a first use cycle (or life cycle), *i.e.* having already served their first purpose; while industrial waste refers to manufacturing scrap, which does not normally reach a consumer.

The opposite of a recycled polymer material is a virgin polymer material. A virgin polymer material is a material that is newly produced, in particular from monomeric units such as alpha olefins. The term "virgin" refers to freshly produced materials and/or objects prior to first use and not being recycled. In case that the origin of the polymer material is not explicitly mentioned, it is a "virgin" polymer material.

In one embodiment of the present invention, the recycled LDPE originates from post-consumer waste.

Preferably, the recycled low density polyethylene preferably comprises from 80.0 wt.-% to 96.0 wt.-%, more preferably from 82.5 wt.-% to 95.5 wt.-%, still more preferably from 85.0 wt.-% to 95.5 wt.-% and most preferably from 87.5 wt.-% to 95.0 wt.-% of ethylene units (C2 units).

Further preferably, the recycled LDPE has an $MFR_2$ of from 0.1 to 10 g/10 min, more preferably from 0.2 to 5 g/10 min, even more preferably from 0.3 to 1.1 g/10 min, most preferably from 0.3 to 0.8 g/10 min, determined according to ISO 1133.

The recycled LDPE preferably has a density of from 910 to 945 $kg/m^3$, preferably from 915 to 942 $kg/m^3$, more preferably from 918 to 940 $kg/m^3$, most preferably from 920 to 935 $kg/m^3$ determined according to ISO 1183.

The recycled LDPE preferably has a melting point (second melting) in the range of from 105 to 130 °C, preferably in the range from 108 to 125 °C, determined according to ISO 11357.

As the recycled LDPE, the products NAV 101 and CWT 100 LG as supplied by Ecoplast and Borealis may be used.

In an embodiment, the recycled LDPE is present in an amount of 10 to 70 wt.-%, preferably in an amount of 15 to 65 wt.-%, relative to the total weight of the polymer composition.

Additives

The polymer composition may comprise one or more additive(s). Suitable additives are well known in the art and can, for example, be selected from the group consisting of anti-block agents, slip agents, process stabilizers, antioxidants, anti-acids, UV protecting agents, nucleating agents and antistatic agents and combinations or blends thereof. Preferably, the additives are contained in a range from 5 to 5000 ppm, preferably in a range from 10 to 5000 ppm and more preferably in a range from 300 to 3000 ppm, relative to the total weight of the polymer composition.

Anti-block agents assist with minimizing interaction of surfaces with one another either through adhesion or other forces. Preferably, the anti-block agent(s) comprise(s) a compound selected from the group consisting of inorganic compounds such as talc, kaolin, cristobalite, natural silica and synthetic silica, diatomaceous earth, mica, calcium carbonate, calcium sulfate, magnesium carbonate, magnesium sulfate, and feldspars and combinations thereof.

Slip agents act as lubricant, e.g. as lubricant between polymer and polymer or as lubricant between polymer and metal, and are used in order to reduce the coefficient of friction. Preferably, the slip agent(s) comprise(s) a compound selected from the group consisting of fatty acid amides, such as erucamide (CAS No. 112-84-5), oleamide (CAS No. 301-02-0) or stearamide (CAS No. 124-26-5), and combinations thereof. For example, the polymer composition may comprise from 300 to 3000 ppm erucamide.

Yet, among the list of optional additives, slip agents are the least preferred. It may even be advantageous, if the polymer composition does not comprise a slip agent.

Blends of stabilizers and antioxidants that may be contained in the polymer composition are commercially available, for example as Irganox B225, Irganox B215 and Irganox B561 marketed by BASF.

Anti-acids (so-called acid scavengers) are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1);

UV protecting agents are, for example, Bis-(2,2,6,6-tetramethyl-4-piperidyl)-sebacate (CAS-No. 52829-07-9, Tinuvin 770); 2-hydroxy-4-octyloxy-benzophenone (CAS-No. 1843-05-6, Chimassorb 81).

Nucleating agents like sodium benzoate (CAS No. 532-32-1); 1,3:2,4-bis(3,4-dimethylbenzylidene)sorbitol (CAS 135861-56-2, Millad 3988).

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

Any of the abovementioned additives may be added during preparation of the polymer composition or may already be contained in any of the polymers used for the preparation of the polymer composition.

Monolayer Film and Multilayered Film Structure

The present invention further provides a monolayer film comprising the polymer composition described above or a multilayered film structure comprising the polymer composition described above. The multilayered film structure may be a 2-layered or 3-layered film structure. It is more preferred when the film is monolayer.

Furthermore, the monolayer film or the multilayered film structure of the present invention may have a thickness of 3 to 1000 $\mu$m, preferably 5 to 500 $\mu$m, more preferably 10 to 250 $\mu$m, still more preferably 10 to 150 $\mu$m, such as *e.g.* 10 to 100 $\mu$m, or even 10 to 60 $\mu$m. The most suitable thickness is dependent on the needs of the desired end application.

The monolayer film or the multilayered film structure of the present invention may exhibit high dart impact strength (DDI) and stiffness, especially in the machine direction (MD). In the passages which follow, preferred ranges for these parameters are given. These ranges particularly apply to a 40 $\mu$m blown monolayer film. Variations in thickness of the film and a configuration as a multilayered film structure may cause changes. This does not mean that the invention does not cover other film thicknesses. Rather it means that when formulated at a given thickness, a monolayer film produced from the inventive polymer composition, preferably has a parameter value in the given range.

Preferably, the monolayer film or multilayered film structure has a dart drop impact (DDI) ranging from 100 to 450 g, preferably from 150 to 350 g, as determined on a blown film having a thickness of 40 $\mu$m according to ISO 7765-1.

The monolayer film or multilayered film structure may have a MD tensile modulus ranging from 220 to 270 MPa and/or a TD tensile modulus ranging from 250 to 350 MPa, the MD and TD tensile modulus being determined on a blown film having a thickness of 40 $\mu$m according to ISO 527-3.

In addition to the excellent mechanical properties, the monolayer film or multilayered film structure of the present invention may have beneficial optical properties.

Furthermore, the monolayer film or multilayered film structure may have a haze ranging from 10 to 55%, preferably from 15 to 50%, as determined according to ASTM D1003-00, and/or a gloss value ranging from 5.0 to 60.0 GU (gloss units), preferably from 10.0 to 52.0 GU, as determined on a blown film having a thickness of 40 $\mu$m according to ASTM D 2457 at an angle of 45°.

Overall, it has surprisingly been found that the polymer composition according to the present invention allows for the production of films with desirable optical and tensile properties, and additionally exhibiting significantly improved impact properties.

Method

The present invention further provides a method for manufacturing the monolayer film or multilayered film structure described above. The method comprises a blown film step.

The films of the present invention can be manufactured by feeding the polymer composition in the form of pellets to an extruder. For film formation using a polymer mixture it is important that the different polymer components be intimately mixed prior to extrusion and blowing of the film as otherwise there is a risk of inhomogeneities appearing in the film.

Thus, it is especially preferred to thoroughly mix and/or blend the components constituting the polymer composition before feeding them to an extruder. This can, for example, be done by using a twin screw extruder, preferably a counter-rotating extruder prior to extrusion and film blowing.

Sufficient homogeneity can also be obtained by selecting the screw design for the film extruder such that it is designed for good mixing and homogenizing.

Furthermore, as the film or the multilayered film structure of the present invention is a blown film, the following applies: Blown films are typically produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the composition will be extruded at a temperature in the range 160°C to 240°C, and cooled by blowing gas (generally air) at a temperature of 10 to 50°C to provide a frost line height of 1 or 2 to 8 times the diameter of the die. The blow up ratio (BUR) should generally be in the range 1.5 to 4, *e.g.* 2 to 4, preferably 2.5 to 3.

Use

The present invention further proposes the use of a linear low density polyethylene (LLDPE) being a terpolymer of ethylene and two alpha-olefin comonomers and having a density ranging from 915 kg/m$^3$ to 930 kg/m$^3$, preferably from 915 kg/m$^3$ to less than 928 kg/m$^3$, for the manufacture of a monolayer film comprising recycled low density polyethylene.

The preferred characteristics of the LLDPE and the recycled low density polyethylene are outlined above.

**Brief Description of the Drawings**

Embodiments of the present invention are illustrated by way of example and are not limited by the figures of the accompanying drawings in which identical references represent similar elements.

Fig. 1 is a diagram in which DDI of the example films is plotted against MD tensile modulus;

Fig. 2 is a diagram in which DDI of the example films is plotted against TD tensile modulus;

Fig. 3 is a diagram in which DDI of the example films is plotted against melt pressure.

**Detailed Description of the Drawings and Examples**

The nature of the present invention will become more clearly apparent in view of the accompanying examples. The examples should, however, in no way limit the scope of the invention.

Examples

Monolayer films have been prepared from the polymer materials below according to the film preparation procedure described below. Furthermore, the methods described below have been used for evaluation purposes.

Methods

*MFR:* MFR was measured according to ISO 1133 at 190 °C. The load has been indicated as a subscript, *i.e.* MFR$_2$ indicates that the measurement has been carried out under a load of 2.16 kg, MFR$_5$ indicates that the measurement has been carried out under a load of 5 kg, and MFR$_{21}$ denotes the measurement has been carried out under a load of 21.6 kg, respectively.

MFR values can be determined on samples as explained above or calculated, for example in a way well known in the art, from MFR values determined on samples as explained above. Especially, the MFR value for the third ethylene copolymer fraction (B) can be calculated based on a measured MFR value for the first ethylene polymer mixture (PEM1), a measured MFR value for the second ethylene polymer mixture (PEM2) and the respective amounts of PEM1 and the third ethylene copolymer fraction (B).

An MFR value for the third ethylene copolymer fraction (B) can be calculated for example based on a logarithmic mixture rule, as for example given by:

$$\log MFR_{PEM2} = w_{PEM1} \times \log MFR_{PEM1} + w_B \times \log MFR_B$$

The MFR value for the second ethylene copolymer fraction (A2) can be calculated in an analogous way.

*Molecular weights and molecular weight distribution:* GPC method was used to determine the molecular weight averages (Mn, Mw and Mz), the ratios of Mw/Mn (PDI) and Mz/Mw.

Molecular weight averages (Mz, Mw and Mn), and molecular weight distribution (MWD) were determined by Gel Permeation Chromatography (GPC) using the following formulas:

$$M_n = \frac{\sum_{i=1}^{N} A_i}{\sum_{i=1}^{N} (A_i/M_i)} \qquad (1)$$

$$M_w = \frac{\sum_{i=1}^{N}(A_i \times M_i)}{\sum_{i=1}^{N} A_i} \qquad (2)$$

$$M_z = \frac{\sum_{i=1}^{N}(A_i \times M_i^2)}{\sum_{i=1}^{N}(A_i \times M_i)} \qquad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-di-tert-butyl-4-methylphenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0.5 kg/mol to 11,500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \; mL/g, \qquad \alpha_{PS} = 0.655$$

$$K_{PE} = 39 \times 10^{-3} \; mL/g, \qquad \alpha_{PE} = 0.725$$

$$K_{PP} = 19 \times 10^{-3} \; mL/g, \qquad \alpha_{PP} = 0.725$$

A third order polynomial fit was used to fit the calibration data.

All samples were prepared in the concentration range of 0.5 - 1 mg/ml and dissolved at 160 °C for 3 hours under continuous gentle shaking.

*Comonomer content - quantitative $^{13}$C-NMR spectroscopy analysis*

Quantification of microstructure by NMR spectroscopy

Quantitative nuclear-magnetic resonance (NMR) spectroscopy was used to quantify the comonomer content of the polymers.

Quantitative $^{13}$C{1H} NMR spectra recorded in the molten-state using a Bruker Avance III 500 NMR spectrometer operating at 500.13 and 125.76 MHz for 1H and 13C respectively. All spectra were recorded using a $^{13}$C optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme {fillip05,griffin07}. A total of 1024 (1k) transients were acquired per spectra.

Quantitative $^{13}$C{1H} NMR spectra were processed, integrated and relevant quantitative properties determined from the integrals. All chemical shifts are internally referenced to the bulk methylene signal ($\delta$+) at 30.00 ppm and assignments done according to {randall89} .

The amount of ethylene was quantified using the integral of the methylene ($\delta$+) sites at 30.00 ppm accounting for the number of reporting sites per monomer:

$$E = I_{\delta+} / 2$$

Characteristic signals resulting from saturated end-groups were observed. The content of such saturated end-groups was quantified using the average of the integral of the signals at 22.8 [I2S]and 32.2 ppm [I3S] assigned to the 2s and 3s sites respectively:

$$S = (1/2)*(I2S + I3S)$$

The presence of comonomer units is corrected for based on the number of comonomer units and saturated end-groups present:

$$Etotal = E + (3/2)*B + (3/2)*BB + (5/2)*BEB + (2/2)*H + (3/2)*S$$

B and H are defined for their respective comonomers. Correction for consecutive and non-consecutive comoner incorporation, when present, is undertaken in a similar way.

Characteristic signals corresponding to the incorporation of 1-butene were observed and the comonomer fraction calculated as the fraction of 1-butene in the polymer with respect to all monomer in the polymer.

The amount isolated 1-butene incorporated in EEBEE sequences was quantified using the integral of the *B2 sites at 39.9 ppm accounting for the number of reporting sites per comonomer:

$$B = I*B2$$

If present the amount consecutively incorporated 1-butene in EEBBEE sequences was quantified using the integral of the $\alpha\alpha$B2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the $\beta\beta$B2B2 site at 24.8 ppm accounting for the number of reporting sites per comonomer:

$$BEB = 2 * I\beta\beta B2B2$$

Due to the overlap of the *B2 and *$\beta$B2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I*B2 - 2 * I\beta\beta B2B2$$

Sequences of BBB were not observed. The total 1-butene content was calculated based on the sum of isolated, consecutively and non-consecutively incorporated 1-butene:

$$Btotal = B + BB + BEB$$

The mole fraction of 1-butene in the polymer was then calculated as:

$$fB = Btotal / (Etotal + Btotal + Htotal)$$

Characteristic signals corresponding to the incorporation of 1-hexene were observed and the comonomer fraction calculated as the fraction of 1-hexene in the polymer with respect to all monomer in the polymer.

The amount isolated 1-hexene incorporated in EEHEE sequences was quantified using the integral of the *B4 sites at 38.3 ppm accounting for the number of reporting sites per comonomer:

$$H = I * B4$$

The total 1-hexene content was calculated from only isolated incorporated 1-hexene:

$$Htotal = H$$

The mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

Further details on the method can be found in: J. Randall, Macromol. Sci., Rev. Macromol. Chem. Phys. 1989, C29, 201; Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128; Pollard, M., Klimke, K., Graf, R., Spiess, H.W., Wilhelm, M., Sperber, O., Piel, C., Kaminsky, W., Macromolecules 2004;37:813; Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198; Castignolles, P., Graf, R., Parkinson, M., Wilhelm, M., Gaborieau, M., Polymer 50 (2009) 2373.

*Density:* Density was measured according to ISO 1183-187. Sample preparation was done by compression moulding in accordance with ISO 1872-2:2007. In case it was not possible to measure the density of a specific fraction directly, it was calculated assuming linear mixing rule.

*Tensile Modulus:* Tensile Modulus was measured in machine (MD) and transverse (TD) direction according to ISO 527-3 on blown film samples prepared as described under "Film sample preparation" herein below with film thickness of 40 μm and at a cross head speed of 1mm/ min for the modulus.

*Dart drop impact (DDI):* Dart drop impact (DDI) was measured on a blown film samples having a thickness of 40 μm using the ISO 7765-1 method.

*Haze:* Haze was measured according to ASTM D1003-00 on blown films having thickness of 40 μm produced as indicated below.

*Gloss:* Gloss was measured on blown films having thickness of 40 μm according to ASTM D 2457 at an angle of 45° in MD direction.

*Melt pressure:* The melt pressure is directly determined during the blown film production by means of pressure sensors (for example, Dynisco pressure sensors) located at the end of the extruder, roughly corresponding to the final section of the screw.

Polymer materials

Three types of polymer materials have been produced.

The first type of polymer material includes polymer compositions having a linear low density polyethylene being a terpolymer of ethylene and two alpha-olefin comonomers and a recycled low density polyethylene ("LLDPE terpolymer + PCR"). The second type of polymer material is the aforementioned linear low density polyethylene ("LLDPE terpolymer only"). The third type of polymer material is a linear low density polyethylene LLDPE containing only one comonomer ("LLDPE copolymer only"). Whereas the first type of polymer material is a polymer composition according to the present invention, the second and third types of polymer materials are comparative.

An overview over the composition of each polymer material is given in table 1 below.

Table 1

| Sample | Components | MFR$_2$ / g/10 min |
|--------|-----------|--------------------|
| IE1 | 80% LLDPE terpolymer + 20% PCR | 0.28 |
| IE2 | 60% LLDPE terpolymer + 40% PCR | 0.41 |
| IE3 | 40% LLDPE terpolymer + 60% PCR | 0.54 |
| CE1 | 100% LLDPE terpolymer | 0.22 |
| CE2 | 100% LLDPE copolymer | 0.29 |

Furthermore, the specifications of the components are listed in table 2 below:

Table 2

| LLDPE terpolymer | Terpolymer of ethylene and two alpha-olefin comonomers, MFR$_2$ = 0.22 g/10 min, density = 923 kg/m$^3$ |
|---|---|
| LLDPE copolymer | Bimodal copolymer of ethylene and an alpha-olefin comonomer, MFR$_2$ = 0.28 g/10 min, density = 921 kg/m$^3$ |
| PCR | LDPE post-consumer recyclate NAV 101 supplied by Ecoplast MFR$_2$ = 0.5 g/10 min, density = 920 kg/m$^3$ |

The LLDPE components have been produced in the following way:

**LLDPE terpolymer**

A loop reactor having a volume of 50 dm$^3$ was operated at a temperature of 70 °C and a pressure of 57 bar. Into the reactor were fed ethylene, propane diluent and hydrogen so that the feed rate of ethylene was 2.0 kg/h, of 1-butene 109 g/h and of hydrogen was 5 g/h. Also a solid polymerisation catalyst component produced as described in Example 1 of EP 1378528 was introduced into the reactor together with triethylaluminum cocatalyst so that the molar ratio of Al/Ti was about 15. The estimated production split was about 1.4 wt.-%.

A stream of slurry was continuously withdrawn and directed to a loop reactor having a volume of 150 dm$^3$ and which was operated at a temperature of 85 °C and a pressure of 55 bar. Into the reactor were further fed additional ethylene, 1-butene comonomer, propane diluent and hydrogen so that the ethylene concentration in the fluid mixture was 6.0 % by mole, the hydrogen to ethylene ratio was 283 mol/kmol, the 1-butent to ethylene ratio was 203 mol/kmol and the fresh propane (diluent) feed was 72,4 kg/h. The estimated production split was 14.5 wt.-%. The resulting copolymer had an MFR$_2$ of 177 g/10 min and density of 949 kg/m$^3$.

A stream of slurry from the reactor was withdrawn intermittently and directed into a loop reactor having a volume of 350 dm$^3$ and which was operated at 85 °C temperature and 53 bar pressure. Into the reactor was further added a fresh propane, ethylene, 1-butene comonomer and hydrogen so that the ethylene concentration in the reaction mixture was 3.5 mol-% and the molar ratio of hydrogen to ethylene was 289 mol/kmol and the molar ratio of 1-butene to ethylene was 614 mol/kmol. The ethylene copolymer withdrawn from the reactor had MFR$_2$ of 258 g/10 min and density of 951 kg/m$^3$. The estimated production split was 23.5 wt.-%.

The slurry was withdrawn from the loop reactor intermittently and directed to a flash vessel operated at a temperature of 50 °C and a pressure of 3 bar. From there the polymer was directed to a fluidised bed gas phase reactor operated at a pressure of 20 bar and a temperature of 80 °C. Additional ethylene, 1-butene comonomer, 1-hexene comonomer, nitrogen as inert gas and hydrogen were added so that the ethylene content in the reaction mixture was 19.3 mol-%, the ratio of hydrogen to ethylene was 10.2 mol/kmol, the molar ratio of 1-butene to ethylene was 92.8 mol/kmol and the molar ratio of 1-hexene to ethylene was 138.7 mol/kmol. The polymer production split in the gas phase reactor was 60.6 wt.-%.

The polymer powder was mixed under nitrogen atmosphere with 1200 ppm of Irganox B561 and 400 ppm Ca-stearate. Then it was compounded and extruded under nitrogen atmosphere to pellets by using a JSW CIMP90 twin screw extruder.

## LLDPE copolymer

The LLDPE copolymer was produced in the same way as the LLDPE terpolymer except that the reaction conditions have been changed as shown in Table 3 below.

Table 3

|  | LLDPE terpolymer | LLDPE copolymer |
|---|---|---|
| **Prepoly reactor** | | |
| Temperature (°C) | 70 | 70 |
| Pressure (bar) | 57 | 58 |
| Split (wt.-%) | 1.4 | 1.4 |
| **First loop reactor (A1)** | | |
| Temperature (°C) | 85 | 85 |
| Pressure (bar) | 55 | 55 |
| C2 conc. (mol-%) | 6.0 | 3.9 |
| H2/C2 ratio (mol/kmol) | 283 | 383 |
| C4/C2 ratio (mol/kmol) | 203 | 226 |
| Split (wt.-%) | 14.5 | 14.6 |
| Density (kg/m$^3$) | 949 | 953 |
| MFR$_2$ (g/10 min) | 177 | 252 |
| **Second loop reactor (PEM1)** | | |
| Temperature (°C) | 85 | 85 |
| Pressure (bar) | 53 | 53 |
| C2 conc. (mol-%) | 3.5 | 2.4 |
| H2/C2 ratio (mol/kmol) | 289 | 355 |
| C4/C2 ratio (mol/kmol) | 614 | 689 |
| Split (wt.-%) | 23.5 | 23.3 |
| Density (kg/m3) | 951 | 951 |
| MFR$_2$ (g/10 min) | 258 | 274 |
| **GPR (PEM2)** | | |
| Temperature (°C) | 80 | 80 |
| Pressure (bar) | 20 | 20 |
| C2 conc. (mol-%) | 19.3 | 11.1 |
| H2/C2 ratio (mol/kmol) | 10.2 | 7.9 |
| C4/C2 ratio (mol/kmol) | 92.8 | 574.6 |
| C6/C2 ratio (mol/kmol) | 138.7 | 0.0 |
| Split (wt.-%) | 60.6 | 60.7 |
| Density (kg/m$^3$) | 921 | 919 |
| MFR$_2$ (g/10 min) | 0.19 | 0.28 |

(continued)

| GPR (PEM2) | | |
|---|---|---|
| MFR$_5$ (g/10 min) | 0.76 | 1.09 |
| MFR$_{21}$ (g/10 min) | 17.1 | 24.4 |
| **Powder** | | |
| Density (kg/m$^3$) | 922.3 | 920.7 |
| MFR$_2$ (g/10 min) | 0.20 | 0.29 |
| MFR$_5$ (g/10 min) | 0.85 | 1.16 |
| MFR$_{21}$ (g/10 min) | 19.1 | 26.1 |
| **Pellet** | | |
| MFR$_2$ (g/10 min) | 0.22 | 0.28 |
| MFR$_5$ (g/10 min) | 0.89 | 1.14 |
| MFR$_{21}$ (g/10 min) | 20.1 | 25.5 |
| Density (kg/m$^3$) | 922.6 | 920.7 |
| Mn (kg/mol) | 10.8 | 11.3 |
| Mw (kg/mol) | 172.5 | 171.5 |
| Mz (kg/mol) | 898.0 | 929.5 |
| Mw/Mn | 16.0 | 15.2 |
| Mz/Mw | 5.2 | 5.4 |
| C4 final (mol-%) | 1.1 | 4.7 |
| C6 final (mol-%) | 2.2 | 0.0 |

Table 4 provides the properties of the LLDPE components.

Table 4**

| | LLDPE terpolymer | LLDPE copolymer |
|---|---|---|
| **PEM1** | | |
| MFR$_2$, g/10 min | 258 | 274 |
| Density, kg/m$^3$ | 951 | 951 |
| Split, wt.-% | 39.4 | 39.3 |
| Mw, kg/mol | 28.25 | 27.95 |
| C4, mol-% | 1.2 | 1.1 |
| **PEM2 (Pellets)** | | |
| MFR$_2$ | 0.22 | 0.28 |
| Density, kg/m$^3$ | 922.6 | 920.7 |
| Mw, kg/mol | 172.5 | 171.5 |
| C4, mol-% | 1.1 | 4.7 |
| C6, mol-% | 2.2 | 0 |

(continued)

| Fraction B* | | |
|---|---|---|
| MFR$_2$, g/10 min | 0.0057 | 0.0074 |
| Density, kg/m$^3$ | 904.1 | 901.1 |
| Split, wt.-% | 60.6 | 60.7 |
| Mw, kg/mol | 266.6 | 264.4 |
| C4 cont., mol-% | 1.02 | 7.03 |
| C6 cont., mol-% | 3.61 | 0 |
| (C4+C6), mol-% | 4.64 | 7.03 |
| **B C6/(C4+C6), mol basis, %** | **77.9** | **0** |

\* In order to calculate the properties of fraction B, the PEM1 fraction was collected and analyzed. This allowed to calculate the properties of the third ethylene copolymer fraction B, more specifically the content of the both comonomers and their relative ratio. Linear mixing rule was used for comonomer content and density calculations; logarithmic mixing rule was used to calculate the MFR$_2$ values of the fraction B.

\*\* Table 4 does not indicate the properties of the second ethylene copolymer fraction A2. However, they can be calculated in an analogous way as the values for fraction B. Namely, PEM1 and A1 fraction are collected and analyzed. Linear mixing rule is used for density calculations; logarithmic mixing rule is used to calculate the MFR2 values of the fraction A2.

Film preparation procedure

The polymer materials IE1, IE2, IE3, CE1 and CE2 have been converted into monolayer films on a small-scale laboratory blown film line from the company COLLIN Lab & Pilot Solutions GmbH.

The line consists of an extruder with a Ø 30 mm screw with an L/D ration of 30. The extruder temperature has been set at 200 °C, the melt temperature was 202 °C and has been recorded after 45 min of process stabilization. The extruder is followed by a blow head which is equipped with a Ø 60 mm annular die with a die gap of 1.5 mm. The line has been run at a constant line speed of 7.5 m/min. The blow up ratio (BUR) of the film bubble was 2.5:1 and the frost line height was 120 mm. The film was produced with a thickness of 40 μm.

Film sample preparation

The blown film is wound to form reels which are followed by film cutting into respective dimension for further testing. The results of the testing are shown in table 5 below.

Table 5

| | IE1 | IE2 | IE3 | CE1 | CE2 |
|---|---|---|---|---|---|
| MD tensile / MPa | 257.5 | 238.1 | 224.5 | 262.2 | 238.7 |
| TD tensile / MPa | 340.7 | 302.8 | 262.4 | 340.2 | 306.2 |
| DDI / g | 260 | 194 | 192 | 430 | 238 |
| Haze / % | 47.7 | 18.7 | 16.1 | 73.2 | 76.4 |
| Gloss 45° MD | 12.7 | 41.1 | 50.7 | 6.3 | 5.7 |
| Melt pressure @ 200 °C / bar | 299 | 269 | 315 | 315 | 284 |

As can be deduced from the results in table 5, the inventive polymer compositions IE1-IE3 can keep up with the compositions in the comparative examples CE1 and CE2 and are even superior in some aspects:

Overall, the blown films produced from the inventive polymer compositions exhibit desirable mechanical properties, in particular a good balance between stiffness (tensile moduli) and toughness (DDI). At the same time, the optical properties of the blown films made of the inventive polymer compositions are improved when compared to the blown films made of the comparative polymer compositions. They have significantly smaller haze values and higher gloss values. Furthermore, the processing conditions are not negatively affected, when changing from the comparative compositions to the inventive compositions. More specifically, it has been possible to process the inventive polymer compositions at 200 °C and a melt pressure in the same order of magnitude as the comparative polymer compositions.

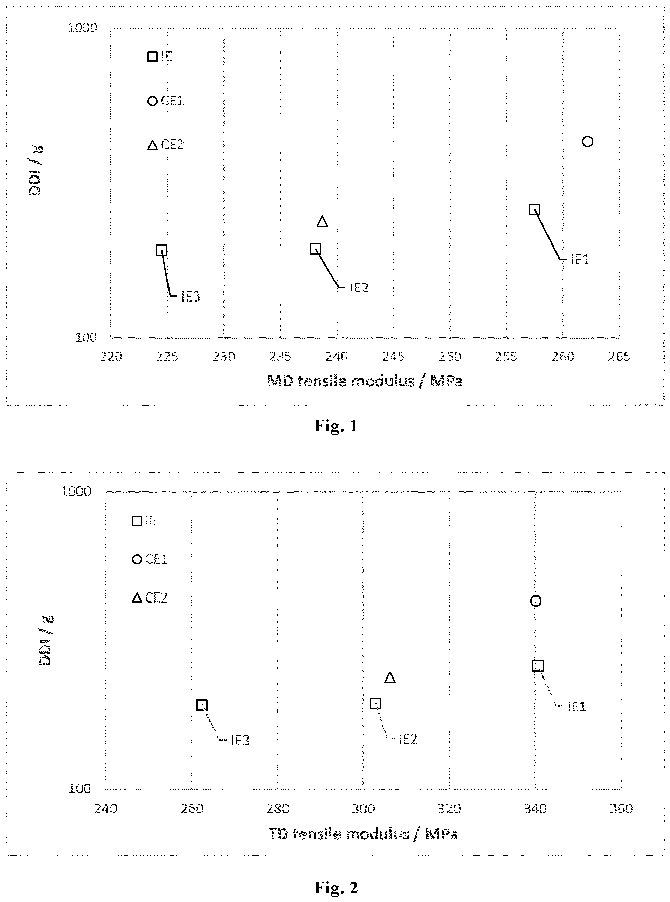

An overview over the relevant results is, furthermore, provided in a visual form by the diagrams in figures 1-3.

Figures

Fig. 1 shows how the balance between stiffness (tensile modulus in MD direction) and toughness (dart drop impact, DDI), changes for the inventive and the comparative examples.

The ratio of DDI to MD tensile modulus for films IE1-IE3 (including PCR) is clearly not as good as for the film CE1 (virgin polymer material only). However, IE2 has almost the same DDI-tensile modulus combination as CE2 (produced from a virgin LLDPE polymer material). An increase of the PCR fraction to 60 wt.-% (from IE2 to IE3) comes along with an only marginal reduction of the tensile properties while the DDI is maintained on the same level.

Fig. 2 allows to draw similar conclusions for the combination of DDI and TD tensile modulus values.

Therefore, it may be concluded that films with an excellent stiffness-toughness balance (which is as good as the one provided by some virgin materials) can be produced from a mixture of virgin and recycled polymer material. This provides an opportunity to provide films with a reduced $CO_2$ footprint.

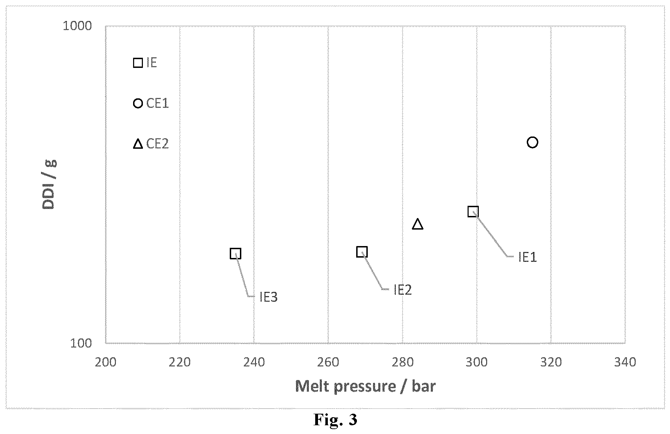

Fig. 3 provides evidence that the incorporation of the recycled polymer material does also not have a negative influence on the processing conditions, such as melt pressure, which can be said to correlate with the rheological properties. More specifically, Fig. 3 shows that the ratio of DDI to melt pressure for the film CE2 produced from virgin material has a value that is between the ratio of DDI to melt pressure for the films including 20-40% of PCR (IE1 and IE2). Thus, also the line output is not at stake when producing films from a mixture of virgin and recycled polymer material.

**Claims**

1. A polymer composition comprising

   25 to 95 wt.-% of a linear low density polyethylene and 5 to 75 wt.-% of a recycled low density polyethylene, relative to the total weight of the polymer composition,
   wherein the linear low density polyethylene is a terpolymer of ethylene and two alpha-olefin comonomers and has a density ranging from 915 kg/m$^3$ and more to less than 928 kg/m$^3$, as determined according to ISO 1183.

2. The polymer composition according to claim 1 having an MFR$_2$ ranging from 0.05 to 5.0 g/10 min, preferably 0.1 to 1.0 g/10 min, more preferably 0.2 to 0.6 g/10 min, as determined according to ISO 1133, and/or a density ranging from 920 kg/m$^3$ and more to 935 kg/m$^3$ or less, as determined according to ISO 1183.

3. The polymer composition according to any of claims 1 and 2, wherein the linear low density polyethylene has an MFR$_2$ ranging from 0.01 to 0.5 g/10 min, preferably 0.1 to 0.4 g/10 min, more preferably 0.15 to 0.3 g/10 min, and/or an MFR$_5$ ranging from 0.5 to 5.0 g/10 min, preferably 0.6 to 2.0 g/10 min, more preferably 0.7 to 1.5 g/10 min, wherein the MFR$_2$ and the MFR$_5$ are determined according to ISO 1133.

4. The polymer composition according to any of the preceding claims, wherein the two alpha-olefin comonomers are selected from the group of alpha-olefins having from 3 to 10 carbon atoms, in particular 1-butene and 1-hexene.

5. The polymer composition according to any of the preceding claims, wherein the linear low density polyethylene has

   - a number average molecular weight (Mn) in a range of from 8,000 to 14,000 g/mol, preferably of from 9,000 to 12,000 g/mol; and/or
   - a weight average molecular weight (Mw) in a range of from 150,000 to 200,000 g/mol, preferably of from 160,000 to less than 190,000 g/mol; and/or
   - a z-average molecular weight (Mz) in a range of from 750,000 to 1,000,000 g/mol, preferably of from 800,000 to 920,000 g/mol,

   wherein the molecular weight averages Mw, Mn and Mz are determined by Gel Permeation Chromatography.

6. The polymer composition according to any of the preceding claims, wherein the linear low density polyethylene comprises:

- 5 to 25 wt.-%, relative to the total weight of the linear low density polyethylene, of a first ethylene copolymer fraction (A1) made of a copolymer of ethylene and at least a first alpha-olefin comonomer, preferably with a density ranging from 920 to 960 kg/m$^3$, as determined according to ISO 1183;
- 15 to 35 wt.-%, relative to the total weight of the linear low density polyethylene, of a second ethylene copolymer fraction (A2) made of a copolymer of ethylene and at least the first alpha-olefin comonomer, preferably with a density ranging from 920 to 960 kg/m$^3$, as determined according to ISO 1183; and
- 40 to 80 wt.-%, relative to the total weight of the linear low density polyethylene, of a third ethylene copolymer fraction (B) made of a polymer of ethylene and at least the first and a second alpha-olefin comonomer,

wherein the third ethylene copolymer fraction (B) preferably has a higher weight-average molecular weight (Mw) than the first ethylene copolymer fraction (A1) and the second ethylene copolymer fraction (A2).

7. The polymer composition according to claim 6, wherein a content of the second alpha-olefin comonomer in the third ethylene copolymer fraction (B) is in a range of from 15 to 85 % based on the total comonomer content on a mol basis in the third ethylene copolymer fraction, as determined according to quantitative $^{13}$C-NMR spectroscopy analysis.

8. The polymer composition according to any of the preceding claims, wherein the linear low density polyethylene has a total comonomer content ranging from 1.5 to 5.0 mol-%, preferably from 2.5 to 3.9 mol-%, as determined by quantitative $^{13}$C-NMR spectroscopy analysis.

9. The polymer composition according to any of the preceding claims, wherein the linear low density polyethylene has a ratio Mw/Mn ranging from 10 to 25 and/or a ratio Mz/Mw ranging from 4 to 10, wherein the molecular weight averages Mw, Mn and Mz are determined by Gel Permeation Chromatography.

10. A monolayer film comprising the polymer composition according to any of the preceding claims or a multilayered film structure comprising the polymer composition according to any of the preceding claims.

11. The monolayer film or multilayered film structure according to claim 10 having a dart drop impact (DDI) ranging from 100 to 450 g, preferably from 150 to 350 g, as determined on a blown film having a thickness of 40 μm according to ISO 7765-1.

12. The monolayer film or multilayered film structure according to any of claims 10 and 11 having a MD tensile modulus ranging from 220 to 270 MPa and/or a TD tensile modulus ranging from 250 to 350 MPa, the MD and TD tensile modulus being determined on a blown film having a thickness of 40 μm according to ISO 527-3.

13. The monolayer film or multilayered film structure according to any of claims 10 to 12 having a haze ranging from 10 to 55%, preferably from 15 to 50%, as determined according to ASTM D1003-00, and/or a gloss value ranging from 5.0 to 60.0 GU, preferably from 10.0 to 52.0 GU, as determined on a blown film having a thickness of 40 μm according to ASTM D 2457 at an angle of 45°.

14. A method for manufacturing the monolayer film or multilayered film structure according to any of claims 10 to 13, comprising a blown film step.

15. Use of a linear low density polyethylene being a terpolymer of ethylene and two alpha-olefin comonomers and having a density ranging from 915 kg/m$^3$ to 930 kg/m$^3$ for the manufacture of a monolayer film comprising recycled low density polyethylene.

Fig. 1

Fig. 2

**Fig. 3**

Europäisches
Patentamt

European
Patent Office

Office européen
des brevets

# EUROPEAN SEARCH REPORT

Application Number

EP 23 15 2904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2020/207940 A1 (BOREALIS AG [AT]) 15 October 2020 (2020-10-15) * claims; examples 1,2 * | 1-15 | INV. C08J5/18 C08L23/04 C08L23/08 |
| A | WO 2019/166652 A1 (BOREALIS AG [AT]) 6 September 2019 (2019-09-06) * page 3, line 23 - line 24 * * page 14, line 16 - line 19; claims * | 1-15 | |
| A | WO 2019/081611 A1 (BOREALIS AG [AT]) 2 May 2019 (2019-05-02) * claims; example 3; table 5 * | 1-15 | |

TECHNICAL FIELDS
SEARCHED      (IPC)

C08J
C08L

The present search report has been drawn up for all claims

| Place of search | Date of completion of the search | Examiner |
|---|---|---|
| Munich | 26 June 2023 | Iraegui Retolaza, E |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
 
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 23 15 2904

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2023

| Patent document cited in search report | | Publication date | Patent family member(s) | | Publication date |
|---|---|---|---|---|---|
| WO 2020207940 | A1 | 15-10-2020 | CA | 3136026 A1 | 15-10-2020 |
| | | | CN | 113661062 A | 16-11-2021 |
| | | | EP | 3953174 A1 | 16-02-2022 |
| | | | KR | 20210137226 A | 17-11-2021 |
| | | | US | 2022097351 A1 | 31-03-2022 |
| | | | WO | 2020207940 A1 | 15-10-2020 |
| WO 2019166652 | A1 | 06-09-2019 | CN | 111801357 A | 20-10-2020 |
| | | | EP | 3759147 A1 | 06-01-2021 |
| | | | WO | 2019166652 A1 | 06-09-2019 |
| WO 2019081611 | A1 | 02-05-2019 | CN | 111315567 A | 19-06-2020 |
| | | | EP | 3700744 A1 | 02-09-2020 |
| | | | ES | 2913629 T3 | 03-06-2022 |
| | | | WO | 2019081611 A1 | 02-05-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020207940 A1
- EP 688794 A
- WO 9951646 A
- WO 0155230 A
- WO 9619503 A
- WO 9632420 A
- WO 2006063771 A
- EP 428054 A
- US 4582816 A
- US 3405109 A
- US 3324093 A
- EP 479186 A
- US 5391654 A
- US 4994534 A
- US 4588790 A
- EP 699213 A
- EP 628343 A
- FI 921632 A
- FI 935856 A
- US 4877587 A
- FI 933073 A
- EP 75049 A
- EP 1415999 A
- WO 02088194 A
- EP 683176 A
- EP 372239 A
- EP 47077 A
- GB 1272778 A
- EP 1600276 A
- EP 1378528 A

**Non-patent literature cited in the description**

- *CHEMICAL ABSTRACTS,* 112-84-5
- *CHEMICAL ABSTRACTS,* 301-02-0
- *CHEMICAL ABSTRACTS,* 124-26-5
- *CHEMICAL ABSTRACTS,* 11097-59-9
- *CHEMICAL ABSTRACTS,* 1592-23-0
- *CHEMICAL ABSTRACTS,* 557-05-1
- *CHEMICAL ABSTRACTS,* 52829-07-9
- *CHEMICAL ABSTRACTS,* 1843-05-6
- *CHEMICAL ABSTRACTS,* 532-32-1
- *CHEMICAL ABSTRACTS,* 135861-56-2
- *CHEMICAL ABSTRACTS,* 97593-29-8
- *CHEMICAL ABSTRACTS,* 71786-60-2
- *CHEMICAL ABSTRACTS,* 204-393-1
- **J. RANDALL.** *Macromol. Sci., Rev. Macromol. Chem. Phys.,* 1989, vol. C29, 201
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373